# EUROPÄISCHE PATENTSCHRIFT

(11) **EP 1 955 386 B1**
(45) Veröffentlichungstag und Bekanntmachung des Hinweises auf die Patenterteilung: **14.09.2016**
(21) Anmeldenummer: 06818929.9
(22) Anmeldetag: 30.11.2006
(51) Int. Cl.: H01M 2/02, H01M 2/04, H01M 2/08

(54) **GALVANISCHES ELEMENT MIT NEUARTIGEM GEHÄUSE**
GALVANIC ELEMENT COMPRISING A NOVEL HOUSING
ELEMENT GALVANIQUE COMPORTANT UN BOITIER DE TYPE NOUVEAU

(30) Priorität: 30.11.2005 DE 102005058132
(43) Veröffentlichungstag der Anmeldung: 13.08.2008
(60) Teilanmeldung: 09008140.7
(73) Patentinhaber: VARTA Microbattery GmbH, 73479 Ellwangen (DE)
(72) Erfinder: BRENNER, Rolf, 73479 Ellwangen (DE); KREIDLER, Bernd, 73479 Ellwangen (DE); ILIC, Dejan, 73479 Ellwangen (DE); HOLL, Konrad, 73434 Aalen-Dewangen (DE); ERNSPERGER, Jürgen, 73491 Neuler (DE)
(74) Vertreter: Patentanwaltskanzlei Cartagena
(86) Internationale Anmeldenummer: PCT/EP2006/011491
(87) Internationale Veröffentlichungsnummer: WO 2007/062838

(56) Entgegenhaltungen:
- EP-A1- 0 731 516
- DE-A1- 3 034 600
- DE-A1- 19 647 593
- JP-A- 55 093 667
- US-A- 5 919 586
- US-A1- 2002 127 467

## Beschreibung

Die vorliegende Erfindung betrifft ein galvanisches Element, insbesondere eine Knopfzelle, mit einem Gehäuse umfassend einen Gehäusebecher, einen Gehäusedeckel und eine Foliendichtung, die den Gehäusebecher gegen den Gehäusedeckel isoliert.

Galvanische Elemente, insbesondere solche in Knopfzellenform, weisen üblicherweise ein Gehäuse aus einem Gehäusebecher (oft auch als Gehäusenapf bezeichnet) und einem Gehäusedeckel auf. Der Gehäusebecher kann beispielsweise aus vernickeltem Tiefziehblech als Stanzziehteil hergestellt werden. Gewöhnlich ist der Gehäusebecher positiv und der Gehäusedeckel negativ gepolt. Derartige galvanische Elemente können die verschiedensten elektrochemischen Systeme enthalten, beispielsweise Zink/MnO₂, primäre Lithium-Systeme oder auch sekundäre Systeme wie Nickel/Cadmium, Nickel/Metallhydrid oder sekundäre Lithium-Systeme.

Der flüssigkeitsdichte Verschluß solcher Zellen erfolgt gewöhnlich durch Umbördeln des Becherrandes über den Rand des Gehäusedeckels in Verbindung mit einem Kunststoffring, der zwischen Gehäusebecher und Gehäusedeckel angeordnet ist und gleichzeitig als Dichtungselement sowie zur Isolierung des Gehäusebechers und des Gehäusedeckels dient. Derartige Knopfzellen sind beispielsweise der DE 31 13 309 A1 zu entnehmen.

Die für diese Knopfzellen erforderlichen Dichtungselemente werden üblicherweise im Spritzgießverfahren, beispielsweise aus Polyamiden hergestellt. Die dazu notwendigen Spritzwerkzeuge sind teuer und aufwendig zu warten. Darüber hinaus ist es praktisch nicht möglich, durch Spritzguß Dichtungselemente mit Wandungen in einer Dicke von weniger als 0,3 mm herzustellen. Im Spritzgießverfahren hergestellte Dichtungen beanspruchen folglich ein verhältnismäßig großes Volumen und beeinträchtigen damit die Kapazitätsausnutzung einer Zelle, was insbesondere bei Knopfzellen eine große Rolle spielen kann.

In der DE 196 47 593 A1 wird der Einsatz eines Dichtungselements beschrieben, das durch Tiefziehen aus einer Folie hergestellt wird. Aus einer beheizten Folie wird mittels einer Ziehmatrize und eines Formstempels unter Vakuum ein becherförmiges Formteil gezogen. Als bevorzugtes Folienmaterial werden Polyamide angegeben. Die Verformung erfolgt abhängig vom gewünschten'Durchmesser/Höhen-Verhältnis in einem oder mehreren abgestuften Arbeitsgängen. Im Bodenbereich des durch Tiefziehen hergestellten becherförmigen Formteils erfolgt anschließend eine Ausstanzung mittels eines Schnittstempels und einer Schnittbuchse. Das so hergestellte Dichtungselement wird auf einen Gehäusedeckel montiert, der dann in einen Gehäusebecher eingesetzt werden kann. In Abhängigkeit der gewählten Verfahrensparameter lassen sich mit dem in der DE 196 47 593 A1 beschriebenen Verfahren bis zu 5 mm hohe Dichtungselemente mit sehr gleichmäßigen Wandstärken herstellen. Die Dicke des Ausgangsmaterials liegt dabei vorzugsweise im Bereich zwischen 0,1 mm und 0,3 mm. Wenn beispielsweise eine Folie mit einer Stärke von 0,15 mm als Ausgangsmaterial verwendet wird, ist eine Wandstärke von ca. 0,12 mm erzielbar.

Die Verwendung einer solch dünnen Foliendichtung vergrößert das zur Verfügung stehende Innenvolumen einer galvanischen Zelle der oben genannten Bauart und resultiert somit in einer deutlichen Kapazitätsverbesserung.

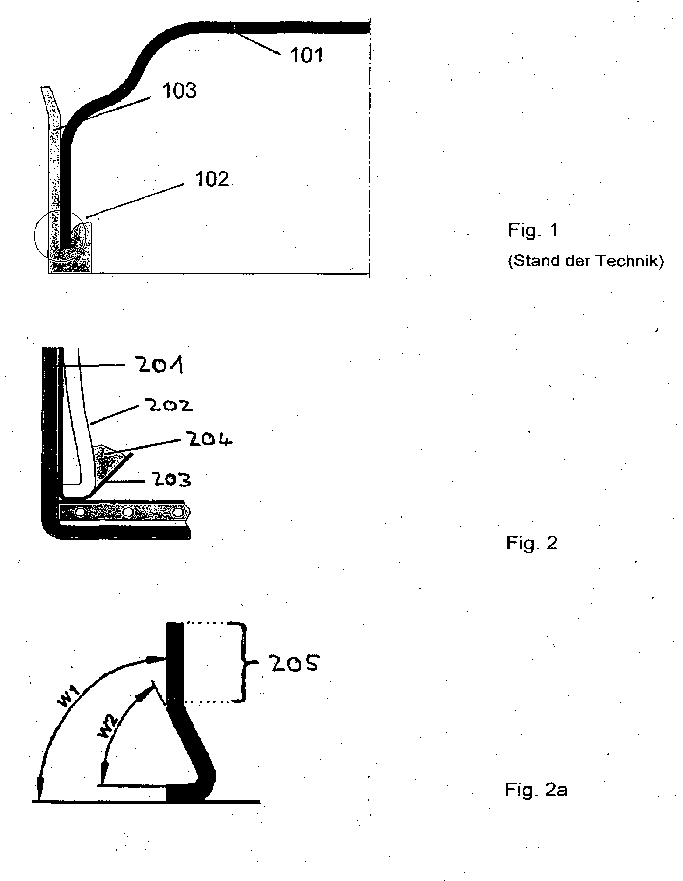

Bei Verwendung herkömmlicher einwandiger Gehäusedeckel (schematisch in Fig. 1 dargestellter Stand der Technik) in Verbindung mit Dichtungselementen aus Folien haben sich allerdings Probleme ergeben. Herkömmliche Deckel sind gerade im Randbereich sehr labil. Sie weisen am Rand häufig scharfe Schnittkanten auf, die unter ungünstigen Umständen eine als Dichtungselement verwendete Folie durchschneiden können. Auch ist die Auflagefläche solcher Deckel sehr gering, so dass gegebenenfalls schon bei geringem Druck ein teilweises Eindringen des Deckels mitsamt Foliendichtung in die Kathode möglich ist.

Aus dem Stand der Technik sind auch Gehäusedeckel mit durch Umschlagen des Randes gebildetem doppelwandigem Gehäusemantel bekannt (siehe DE 196 47 593 A1). Deren Verwendung vermag die angesprochenen, in Verbindung mit Foliendichtungen auftretenden Probleme durchaus zu lösen. Der Einsatz solcher Gehäusedeckel gewährleistet eine erhöhte Stabilität, scharfe Kanten im Randbereich treten nicht auf, und auch die Auflagefläche solcher Deckel ist gegenüber der herkömmlicher Gehäusedeckel deutlich erhöht.

Allerdings wirkt sich die Verwendung doppelwandiger Gehäusedeckel negativ auf das zur Verfügung stehende Innenvolumen in einer Zelle aus. Die durch den Einsatz von Foliendichtungen theoretisch erzielbare Kapazitätssteigerung wird in der Folge nicht erreicht.

Der vorliegenden Erfindung liegt die Aufgabe zugrunde, eine galvanische Zelle der eingangs genannten Bauart bereitzustellen, die sich durch ein optimiertes Innenvolumen und damit eine optimierte Kapazitätsausnutzung auszeichnet, ein Auftreten der oben genannten Probleme dabei aber zugleich vermeidet.

Diese Aufgabe wird gelöst durch das galvanische Element mit den Merkmalen des Anspruchs 1. Bevorzugte Ausführungsformen des erfindungsgemäßen Verfahrens sind in den abhängigen Ansprüchen 2 bis 9 dargestellt.

Ein galvanisches Element gemäß der vorliegenden Erfindung liegt in besonders bevorzugter Ausführungsform als Knopfzelle vor. Es weist ein Gehäuse mit einem Gehäusebecher, einem Gehäusedeckel und einer Foliendichtung auf. Letztere isoliert den Gehäusebecher gegen den Gehäusedeckel.

Besonders zeichnet sich ein erfindungsgemäßes galvanisches Element durch seinen Gehäusedeckel aus. Dieser weist einen Deckelboden, daran angeschlossen einen zylindrisch ausgebildeten Abschnitt und einen sich an diesen anschließenden Randabschnitt auf, wobei der Rand des Gehäusedeckels im Randabschnitt nach außen umgebogen ist.

Infolge des Umbiegens des Gehäusedeckels liegen gegebenenfalls am Rand des Gehäusedeckels auftretende scharfe Schnittkanten nicht senkrecht auf der Foliendichtung auf, was die Gefahr einer Beschädigung der Foliendichtung stark verringert.

Darüber hinaus weist ein erfindungsgemäßes galvanisches Element neben den bereits erwähnten verbesserten Sicherheitseigenschaften im Hinblick auf eine Beschädigung der Foliendichtung insbesondere auch eine deutlich verbesserte Kapazitätsausnutzung auf. Im Gegensatz zu den aus der DE 196 47 593 A1 bekannten galvanischen Elementen mit durch Umschlagen des Randes gebildetem doppelwandigem Gehäusemantel ist vorliegend der Rand nur im Randabschnitt umgebogen. Ein breiter, doppelwandiger Bereich, wie ihn aus dem Stand der Technik bekannte Gehäusedeckel aufweisen, wird im vorliegenden Fall nicht gebildet. Damit ergibt sich lediglich im Randabschnitt eine Einschränkung des Innenvolumens des Gehäuses eines erfindungsgemäßen galvanischen Elements.

Der Randabschnitt eines erfindungsgemäßen galvanisches Elements weist einen im Wesentlichen L-förmigen Querschnitt auf. Der umgebogene Rand kann dabei vorzugsweise im wesentlichen senkrecht zu nicht umgebogenen Bereichen des Randabschnitts angeordnet sein, also ausgehend von diesen um ca. 80° bis 100°, vorzugsweise ca 85° bis 95°, insbesondere ca. 90°, nach außen oder nach innen gebogen. Der Winkel zwischen dem umgebogenen Rand des Gehäusedeckels und dem zylindrisch ausgebildeten Abschnitt beträgt dann vorzugsweise mehr als 90°, insbesondere 95° bis 115°, besonders bevorzugt 105° bis 110°.

Allerdings sind auch Abweichungen von dieser senkrechten Anordnung möglich. So kann der umgebogene Rand des Gehäusedeckels auch in einem Winkel von ca. 90° zum zylindrisch ausgebildeten Abschnitt ausgerichtet sein. Der Winkel zwischen umgebogenem Rand und nicht umgebogenen Teil des Randabschnitts beträgt dann weniger als 90°, bevorzugt 65° bis 75°, insbesondere ca. 70°.

Der Rand des Gehäusedeckels ist nach außen umgebogen und radial nach innen eingezogen.

In diesen Ausführungsformen weist der Gehäusedeckel im Randabschnitt vorzugsweise einen maximalen Außendurchmesser auf, der im wesentlichen dem Außendurchmesser des oberhalb des Randabschnitts angeordneten, zylindrisch ausgebildeten Abschnitts entspricht. Der Innendurchmesser des Randabschnitts ist in dieser Ausführungsform gegenüber dem Innendurchmesser des zylindrisch ausgebildeten Abschnitts verengt.

Es kann auch bevorzugt sein, dass der Außendurchmesser des Randabschnitts den des zylindrisch ausgebildeten Abschnitts leicht überschreitet, was im Hinblick auf die Dichtigkeit eines erfindungsgemäßen galvanischen Elements von Vorteil sein kann (der Randabschnitt drückt in einem fertig montierten Gehäuse fest an den Becherrand bzw. an eine zwischen Becherrand und Gehäusedeckel angeordneten Foliendichtung). Die Abweichung nach außen beträgt in diesen Ausführungsformen vorzugsweise weniger als 50 % der Wandstärke des Gehäusedeckels.

Es ist bevorzugt, dass weniger als 0,5 mm des Gehäusedeckels eines erfindungsgemäßen galvanischen Elements nach außen umgebogen sind. Besonders bevorzugt sind es 0,1 mm bis 0,35 mm, insbesondere nur ca. 0,25 mm. Diese Zahlen verdeutlichen weiter den Unterschied zum Stand der Technik, aus dem lediglich Gehäusedeckel mit einem durch Umschlagen des Randes gebildeten, doppelwandigen Bereich bekannt sind, welcher sich in der Regel mindestens über die halbe Höhe (mehrere Millimeter) des Gehäusedeckels erstreckt.

Die Foliendichtung eines erfindungsgemäßen galvanisches Elements ist insbesondere aus einer tiefziehbaren Folie gebildet. Grundsätzlich kommen dafür alle gängigen, tiefziehbaren Kunststoffe in Betracht, insbesondere auch Komposite und Sandwichstrukturen aus mehreren verschiedenen Kunststoffen. Besonders bevorzugt ist die Foliendichtung aus einem Polyamid gebildet.

In einer weiteren bevorzugten Ausführungsform ist die Foliendichtung aus einer hochtemperaturbeständigen Folie gebildet. Foliendichtungen aus einer hochtemperaturbeständigen Folie sind insbesondere für Knopfzellen geeignet, die im Elektronikbereich eingesetzt werden. Dabei werden Platinen mit Knopfzellen sowie weiteren (insbesondere elektronischen) Bauteilen bestückt und im Schwallbad oder nach der Reflow-Technik verlötet. Kurzzeitig können sich die Knopfzellen dabei auf Temperaturen von bis zu 250 °C aufheizen. Dichtungen aus Polyethylen oder aus Polyamiden erweichen bei diesen Temperaturen bereits und verlieren ihre Form. Die Folgen sind Undichtigkeiten und auslaufende Zellen.

In einer besonders bevorzugten Ausführungsform ist die Foliendichtung deshalb aus Polyetheretherketon (PEEK) gebildet. Dichtungen aus diesem Material können dauerhaft auf 250 °C, kurzzeitig sogar auf 300 °C, erhitzt werden. Aufgrund seiner Fließeigenschaften ist die Herstellung von Dichtungen aus PEEK durch Spritzgießen nicht möglich. Als Folie läßt es sich aber leicht zu einer Dichtung ziehen.

Die Herstellung der Foliendichtung eines erfindungsgemäßen Elements erfolgt bevorzugt als Formteil wie in der DE 196 47 593 beschrieben. Es ist bevorzugt, dass das so hergestellte Dichtungsformteil nach seiner Herstellung auf einen Gehäusedeckel montiert wird, der dann in einen Gehäusebecher eingesetzt werden kann. Im verschlossenen Zustand des Gehäuses eines erfindungsgemäßen galvanischen Elements ist die Foliendichtung vorzugsweise umlaufend auf dem Gehäusedeckel angeordnet, wobei es dabei weiter bevorzugt ist, dass sie eine ins Zellinnere weisende Überlappung im Randbereich des Gehäusedeckels aufweist. In Richtung des Deckelbodens reicht die Foliendichtung vorzugsweise so weit, dass beim Umbördeln des Gehäusebechers ein direkter Kontakt zwischen Gehäusebecher und Gehäusedeckel ausgeschlossen ist.

In einer bevorzugten Ausführungsform ist die Foliendichtung auf den Gehäusedeckel aufgeschrumpft. Auch der Vorgang des Aufschrumpfens ist in der DE 196 47 593 beschrieben.

Vorzugsweise werden Foliendichtungen verwendet, die eine Dicke zwischen 0,01 mm und 0,3 mm aufweisen. Besonders bevorzugt sind Foliendichtungen mit einer Dicke zwischen 0,01 mm und 0,15 mm, insbesondere zwischen 0,08 mm und 0,12 mm.

In einer bevorzugten Ausführungsform eines erfindungsgemäßen galvanischen Elementes ist, insbesondere zur Abdichtung gegen Kriecheffekte, im Randabschnitt des Gehäusedeckels zwischen Foliendichtung und Deckel eine Dichtmasse eingebracht. Bei der Dichtmasse handelt es sich vorzugsweise um Bitumen bzw. um einen Polyamidkleber.

Der Gehäusebecher und der Gehäusedeckel eines erfindungsgemäßen galvanischen Elements sind vorzugsweise aus Metall gefertigt. Als metallischer Werkstoff ist z.B. vernickeltes Tiefziehblech geeignet. Bevorzugt sind u.a. auch Trimetalle, beispielsweise mit der Abfolge Nickel, Stahl (oder Edelstahl) und Kupfer (von außen nach innen).

Der Gehäusedeckel eines erfindungsgemäßen galvanischen Elements weist aufgrund seiner Ausgestaltung im Randabschnitt eine überraschend hohe Stabilität auf. Während herkömmliche Gehäusedeckel ohne umgeschlagenen Rand im Randbereich sehr labil sind und deshalb aus Stäbilitätsgründen häufig nur als Gehäusedeckel mit relativ hohen Wandstärken verbaut werden können, lassen sich die Gehäusedeckel eines erfindungsgemäßen galvanischen Elements auch in sehr niedrigen Wandstärken verbauen.

Besonders bevorzugt weist der Gehäusedeckel eines erfindungsgemäßen galvanischen Elements eine Wandstärke zwischen 0,08 mm und 0,2 mm, insbesondere zwischen 0,1 mm und 0,15 mm, auf.

Ein Gehäusedeckel weist bevorzugt eine Höhe zwischen 2 mm und 15 mm, besonders bevorzugt zwischen 2 mm und 10 mm, insbesondere zwischen 3 mm und 6 mm, auf.

Eine besonders hohe Stabilität weist der Gehäusedeckel eines erfindungsgemäßen galvanischen Elements gegenüber radialem Druck im Randabschnitt auf. Diese Stabilität eröffnet mit besonderem Vorteil eine Möglichkeit, die Dichtigkeitseigenschaften des Gehäuses eines erfindungsgemäßen galvanischen Elements weiter zu optimieren.

Ein galvanisches Element nach der vorliegenden Erfindung ist dann besonders bevorzugt, wenn es einen Gehäusebecher aufweist, der im Bereich des Becherbodens radial nach innen eingezogen ist.

Durch das Einziehen des Becherbodens kann radialer Druck auf den an der Innenwand des Gehäusebechers anliegenden Randabschnitt des Gehäusedeckels erzeugt werden. Die zwischen Gehäusebecher und Gehäusedeckel angeordnete Foliendichtung wird dadurch in diesem Bereich zusammengepreßt, was in einem deutlich verbesserten Auslaufverhalten eines erfindungsgemäßen galvanischen Elements resultiert. Das Einziehen kann insbesondere beim oder nach dem auf die Montage des galvanischen Elements folgenden Umbördeln des Gehäusebechers erfolgen.

Vorzugsweise weist ein erfindungsgemäßes galvanisches Element im Bereich des Einzugs einen um 0,01 mm bis 0,15 mm, vorzugsweise um 0,05 mm bis 0,1 mm, verringerten Außendurchmesser auf.

Die genannten und weitere Vorteile der Erfindung ergeben sich aus der Beschreibung der nun folgenden Beispiele und Zeichnungen in Verbindung mit den Unteransprüchen. Dabei können die einzelnen Merkmale der Erfindung für sich allein oder in Kombination miteinander verwirklicht sein. Die beschriebenen Ausführungsformen dienen lediglich zur Erläuterung und zum besseren Verständnis der Erfindung und sind in keiner Weise einschränkend zu verstehen.

### Figurenbeschreibung

In den Zeichnungen zeigen:
- Fig. 1:: Querschnitt eines herkömmlichen Gehäusedeckels mit einer Foliendichtung nach dem Stand der Technik (Teilansicht).
- Fig. 2:: Teilansicht des Gehäuses einer bevorzugten Ausführungsform eines erfindungsgemäßen galvanischen Elements (Querschnitt) mit L-förmig nach außen umgebogenem Gehäusedeckel
- Fig. 2a:: Querschnitt des Randbereichs eines nach außen umgebogenen Gehäusedeckels
- Fig. 2b:: Querschnitt des Randbereichs eines L-förmig umgebogenen Gehäusedeckels

**Fig. 1** zeigt einen herkömmlichen Gehäusedeckel **101,** der eine scharfe Schnittkante im Randbereich **102** aufweisen kann, die unter ungünstigen Umständen eine als Dichtungselement **103** verwendete Folie durchschneiden könnte.

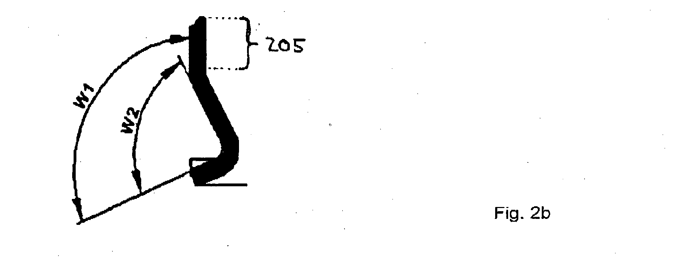

**Fig. 2** zeigt eine Teilansicht des Gehäuses einer bevorzugten Ausführungsform eines erfindungsgemäßen galvanischen Elements (Querschnitt) mit L-förmig nach außen umgebogenem Gehäusedeckel. Dargestellt sind der Gehäusebecher **201,** der Randabschnitt des Gehäusedeckels **202,** eine Foliendichtung **203** und eine zwischen Foliendichtung **203** und Gehäusedeckel **202** eingebrachte Dichtmasse **204.** Der umgebogene Rand des Gehäusedeckels **202** ist in einem Winkel von ca. 90° zum zylindrisch ausgebildeten Abschnitt (nicht dargestellt) ausgerichtet. Der Winkel zwischen umgebogenem Rand und nicht umgebogenen Teil des Randabschnitts beträgt weniger als 90°. Der umgebogene Rand ist nach innen eingezogen, so dass der maximale Außendurchmesser des Gehäusedeckels im Randbereich **202** im wesentlichen dem Außendurchmesser des nicht dargestellten zylindrisch ausgebildeten Abschnitts entspricht.

**Fig. 2a** zeigt den Querschnitt des Randbereichs eines nach außen umgebogenen Gehäusedeckels, wobei der umgebogene Rand nach innen eingezogen ist. Der umgebogene Rand des Gehäusedeckels ist in einem Winkel W1 von ca. 90° zum zylindrisch ausgebildeten Abschnitt **205** (nur teilweise dargestellt) ausgerichtet. Der Winkel W2 zwischen umgebogenem Rand und nicht umgebogenen Teil des Randabschnitts beträgt deutlich weniger als 90°.

**Fig. 2b** zeigt einen L-förmig ausgebildeten Randabschnitt eines Gehäusedeckels **202,** wobei der umgebogene Rand nach innen eingezogen ist. Hier ist der umgebogene Rand des Gehäusedeckels in einem Winkel W1 von deutlich mehr als 90° zum zylindrisch ausgebildeten Abschnitt **205** (nur teilweise dargestellt) ausgerichtet. Der Winkel W2 zwischen umgebogenem Rand und nicht umgebogenen Teil des Randabschnitts beträgt ca. 90°.

## Patentansprüche

1. Galvanisches Element, insbesondere Knopfzelle, mit einem Gehäuse umfassend einen Gehäusebecher (201), einen Gehäusedeckel und eine Foliendichtung (203), die den Gehäusebecher gegen den Gehäusedeckel isoliert, wobei der Gehäusedeckel einen Deckelboden, einen daran angeschlossenen zylindrisch ausgebildeten Abschnitt (205) und einen sich daran anschließenden Randabschnitt (202) aufweist, **dadurch gekennzeichnet, dass** der Rand des Gehäusedeckels im Randabschnitt nach außen umgebogen ist, so dass der Randabschnitt einen im wesentlichen L-förmigen Querschnitt aufweist, und dass der Rand radial nach innen eingezogen ist.

2. Galvanisches Element nach Anspruch 1, **dadurch gekennzeichnet, dass** der Gehäusedeckel im Randabschnitt (202) einen maximalen Außendurchmesser aufweist, der im Wesentlichen dem Außendurchmesser des zylindrisch ausgebildeten Abschnitts (205) entspricht.

3. Galvanisches Element nach einem der vorhergehenden Ansprüche, **dadurch gekennzeichnet, dass** die Foliendichtung (203) aus einer tiefziehbaren Folie gebildet ist.

4. Galvanisches Element nach einem der vorhergehenden Ansprüche, **dadurch gekennzeichnet, dass** die Foliendichtung (203) aus einem Polyamid gebildet ist.

5. Galvanisches Element nach einem der Ansprüche 1 bis 3, **dadurch gekennzeichnet, dass** die Foliendichtung (203) aus einer Folie aus Polyetheretherketon, gebildet ist.

6. Galvanisches Element nach einem der vorhergehenden Ansprüche, **dadurch gekennzeichnet, dass** die Foliendichtung (203) eine Dicke zwischen 0,01 mm und 0,3 mm aufweist.

7. Galvanisches Element nach einem der vorhergehenden Ansprüche, **dadurch gekennzeichnet, dass** der Gehäusedeckel eine Wandstärke zwischen 0,08 mm und 0,2 mm aufweist.

8. Galvanisches Element nach einem der vorhergehenden Ansprüche, **dadurch gekennzeichnet, dass** der Gehäusebecher im Bereich des Becherbodens radial nach innen eingezogen ist.

9. Galvanisches Element nach Anspruch 8, **dadurch gekennzeichnet, dass** der Gehäusebecher im Bereich des Einzugs einen um 0,01 mm bis 0,15 mm verringerten Außendurchmesser aufweist.

## Claims

1. Galvanic element, in particular a button cell, having a housing comprising a housing cup (201), a housing cover and a film seal (203), which isolates the housing cup from the housing cover, wherein the housing cover has a cover base, a cylindrical section (205) adjacent to it and an edge section (202) adjacent to it, **characterized in that** the edge of the housing cover is bent around outwards in the edge section such that the edge section has an essentially L-shaped cross section, and that the edge is drawn radially inwards.

2. Galvanic element according to Claim 1, **characterized in that**, in the edge section (202), the housing cover has a maximum external diameter which corresponds essentially to the external diameter of the cylindrical section (205).

3. Galvanic element according to either of the preceding claims, **characterized in that** the film seal (203) is formed from a film which can be thermoformed.

4. Galvanic element according to one of the preceding claims, **characterized in that** the film seal (203) is formed from a polyamide.

5. Galvanic element according to one of Claims 1 to 3, **characterized in that** the film seal (203) is formed from a film of polyetheretherketone.

6. Galvanic element according to one of the preceding claims, **characterized in that** the film seal (203) has a thickness of between 0.01 mm and 0.3 mm.

7. Galvanic element according to one of the preceding claims, **characterized in that** the housing cover has a wall thickness of between 0.08 mm and 0.2 mm.

8. Galvanic element according to one of the preceding claims, **characterized in that** the housing cup is drawn radially inwards in the area of the cup base.

9. Galvanic element according to Claim 8, **characterized in that** the housing cup has an external diameter which is reduced by 0.01 mm to 0.15 mm in the area of the indent.

## Revendications

1. Élément galvanique, en particulier pile-bouton, avec un boîtier comprenant une coupelle de boîtier (201), un couvercle de boîtier et un joint d'étanchéité à film (203) qui isole la coupelle de boîtier du couvercle de boîtier, le couvercle de boîtier présentant un fond de couvercle, une portion s'y raccordant (205) réalisée sous forme cylindrique et une portion de bord s'y raccordant (202), **caractérisé en ce que** le bord du couvercle de boîtier est recourbé vers l'extérieur dans la portion de bord, de telle sorte que la portion de bord présente une section transversale essentiellement en forme de L, et **en ce que** le bord est rentré radialement vers l'intérieur.

2. Élément galvanique selon la revendication 1, **caractérisé en ce que** le couvercle de boîtier présente, dans la portion de bord (202), un diamètre extérieur maximal qui correspond essentiellement au diamètre extérieur de la portion (205) réalisée sous forme cylindrique.

3. Élément galvanique selon l'une quelconque des revendications précédentes, **caractérisé en ce que** le joint d'étanchéité à film (203) est formé d'un film pouvant être embouti profond.

4. Élément galvanique selon l'une quelconque des revendications précédentes, **caractérisé en ce que** le joint d'étanchéité à film (203) est formé d'un polyamide.

5. Élément galvanique selon l'une quelconque des revendications 1 à 3, **caractérisé en ce que** le joint d'étanchéité à film (203) est formé d'un film de polyétheréthercétone.

6. Élément galvanique selon l'une quelconque des revendications précédentes, **caractérisé en ce que** le joint d'étanchéité à film (203) présente une épaisseur comprise entre 0,01 mm et 0,3 mm.

7. Élément galvanique selon l'une quelconque des revendications précédentes, **caractérisé en ce que** le couvercle de boîtier présente une épaisseur de paroi comprise entre 0,08 mm et 0,2 mm.

8. Élément galvanique selon l'une quelconque des revendications précédentes, **caractérisé en ce que** la coupelle de boîtier est rentrée radialement vers l'intérieur dans la région du fond de coupelle.

9. Élément galvanique selon la revendication 8, **caractérisé en ce que** la coupelle de boîtier présente dans la région du rentré un diamètre extérieur réduit de 0,01 mm à 0,15 mm.
